# EUROPEAN PATENT SPECIFICATION

(11) **EP 4 322 306 B1**
(45) Date of publication and mention of the grant of the patent: **09.07.2025**
(21) Application number: 23215042.5
(22) Date of filing: 07.12.2023
(51) Int. Cl.: H01M 50/403, H01M 10/052, H01M 50/414, H01M 50/434, H01M 50/446, H01M 50/449, H01M 50/489, H01M 50/451, H01M 10/0525, H01M 50/423, H01M 50/431, H01M 50/443

(54) **COMPOSITE SLURRY, AND PREPARATION METHOD AND USE THEREOF**
VERBUNDAUFSCHLÄMMUNG SOWIE HERSTELLUNGSVERFAHREN UND VERWENDUNG DAVON
SUSPENSION COMPOSITE, SON PROCÉDÉ DE PRÉPARATION ET SON UTILISATION

(30) Priority: 06.07.2023 CN 202310820727
(43) Date of publication of application: 14.02.2024
(73) Proprietor: Yantai Tayho Advanced Materials Research Institute Co. ,Ltd, Yantai Etda Shandong 264000 (CN); Tayho Battery Materials Technology Co., Ltd, Yantai Etda Shandong 264000 (CN)
(72) Inventor: CHEN, Qi, Yantai ETDA 264000 (CN); JIANG, Ming, Yantai ETDA 264000 (CN); GUAN, Zhenhong, Yantai ETDA 264000 (CN); YANG, Dongping, Yantai ETDA 264000 (CN); LI, Meng, Yantai ETDA 264000 (CN); SONG, Xiquan, Yantai ETDA 264000 (CN)
(74) Representative: JD&P Patent Attorneys Joanna Dargiewicz & Partners

(56) References cited:
- WO-A1-2019/205589
- CN-A- 109 411 680
- CN-A- 110 048 063
- CN-A- 112 531 285
- US-B1- 6 447 958
- BIOLIN SCIENTIFIC: "The Washburn Method", TECHNOLOGY NOTE 5, 28 April 2023 (2023-04-28), pages 1 - 2, XP093042812
- HAOPENG CAI: "Water-Dispersed Poly(p-Phenylene Terephthamide) Boosting Nano-Al2O3-Coated Polyethylene Separator with Enhanced Thermal Stability and Ion Diffusion for Lithium-Ion Batteries", POLYMERS, vol. 11, no. 8, 1 August 2019 (2019-08-01), CH, pages 1362, XP093154999, ISSN: 2073-4360, DOI: 10.3390/polym11081362
- BIOLIN SCIENTIFIC: "The Washburn Method", TECHNOLOGY NOTE 5, 28 April 2023 (2023-04-28), pages 1 - 2, XP093042812, Retrieved from the Internet <URL:https://cdn2.hubspot.net/hubfs/516902/Pdf/Attension/Tech%20Notes/AT-TN-05-Washburn-method.pdf>
- EUNICE K WONG ET AL: "Battery Separator Characterization and Evaluation Procedures for NASA's Advanced Lithium-Ion Batteries", 1 May 2010 (2010-05-01), XP055608606, Retrieved from the Internet <URL:https://ntrs.nasa.gov/archive/nasa/casi.ntrs.nasa.gov/20100021170.pdf>
- MACNEIL D D ET AL: "A comparison of the electrode/electrolyte reaction at elevated temperatures for various Li-ion battery cathodes", JOURNAL OF POWER SOURCES, ELSEVIER, AMSTERDAM, NL, vol. 108, no. 1-2, 1 June 2002 (2002-06-01), pages 8 - 14, XP004355450, ISSN: 0378-7753, DOI: 10.1016/S0378-7753(01)01013-8

## Description

### TECHNICAL FIELD

The present disclosure relates to the technical field of lithium battery materials, and particularly relates to an isocyanate-modified nanoceramic particle/aromatic polyamide (aramid) *in-situ* composite slurry, a preparation method thereof, and a method for preparing a lithium battery separator and lithium battery separator obtained by this method.

### BACKGROUND

A separator is one of the key internal components for a lithium battery. The separator is located between a positive electrode and a negative electrode. A major role of the separator is to separate active materials of the positive and negative electrodes to avoid a short circuit caused by contact between the two electrodes, and to allow the rapid transportation of charged ions. In order to improve the heat resistance, the separator is generally coated with a slurry, which not only improves the heat resistance of the separator, but also helps protect positive and negative electrodes of a lithium battery. However, the slurry in the related prior art exhibits poor compatibility with the separator, and thus the slurry is easy to fall off from the separator to weaken the heat resistance of the separator, thereby affecting a service life of the lithium battery.

At present, commercial lithium battery separators are mainly polyolefin (PO) separators based on polyethylene (PE) and polypropylene (PP), including single-layer PP separators, single-layer PE separators, and multi-layer PP/PE/PP composite separators. PO materials have advantages such as high strength, excellent acid and alkali resistance, and excellent solvent resistance, but have a low melting point of 180°C or lower. When the temperature inside or outside a lithium battery arises and is close to a melting point of the separator, the separator will undergo deformation retraction or melt fracture to cause a short circuit in positive and negative electrodes of the lithium battery, which will accelerate the thermal runaway of the lithium battery. In addition, when a lithium battery is discharged at a high power, the rise of a temperature inside the lithium battery is correlated with impedance, which requires a separator in the lithium battery to have excellent impedance performance.

Currently, in order to improve the thermal performance of a PO separator, the PO separator is often modified through ceramic coating. However, ceramic particles are inorganic particles, and thus a binder is required to improve the adhesion among ceramic particles and the adhesion between ceramic particles and a PO film, thereby avoiding the phenomenon of powder dropping. For example, Chinese patent application No. CN 109411679 A discloses a ceramic slurry, a ceramic separator, and a lithium-ion battery (LIB). The ceramic slurry includes: a ceramic powder; a binder including a polar binder and a non-polar binder; a dispersing agent; and a surfactant. The binder in the ceramic slurry includes too many polar functional groups. Although the polar functional groups can improve the adhesion of the ceramic slurry, the polar functional groups are very easy to cause thermochemical reactions among components in LIB under heat, which leads to the thermal runaway of the LIB and even causes an explosion, indicating great potential safety hazards. A separator coated with a ceramic alone exhibits excellent thermal shrinkage performance, but still has a low breakage temperature.

Currently, aramid-coated LIB separators are mostly prepared by a compounding method. The compounding method is as follows: an aramid solution is coated on a surface of a PO separator, and then a solvent in the aramid solution is removed to obtain an aramid/PO separator. However, a composite film prepared by the compounding method has shortcomings such as large thickness and uneven pore size distribution. Moreover, the compounding method has harsh requirements for a molecular weight of aramid, and aramid needs to be dissolved by a suitable solvent due to its poor solubility, which increases a cost to some extent. For example, Chinese patent applications No. CN112531285A and No. CN112694610A disclose a process of coating an LIB separator with modified para-aramid, where another monomer is introduced into the traditional para-aramid to improve the comprehensive physical properties of a composite coated film. However, this process is complicated, and a separator prepared by this process has a large thickness, a low porosity, and poor heat resistance, which leads to performance degradation of a battery. Chinese patent application No. CN113140867A and Chinese patent No. CN113136121B disclose a furyl-containing bio-based aramid polymer, and a use of the furyl-containing bio-based aramid polymer in an LIB separator. The use includes: the furyl-containing bio-based aramid polymer is first dissolved, and then a variety of additives are added to obtain a coating solution; and the coating solution is coated on a film to improve physical properties of the film. However, this process is cumbersome and involves many raw materials, and a coated film prepared by this process does not have a three-dimensional (3D) network structure and exhibits a low electrolyte migration rate.

Chinese patent application No. CN115663394A discloses a dissolution system for para-aramid and a use thereof, an aramid-coated separator and a preparation method thereof, and an aramid/ceramic mixture-coated separator and a preparation method thereof. The preparation method of the aramid/ceramic mixture-coated separator is that: a ceramic slurry is mixed with a para-aramid slurry prepared by the dissolution system to obtain an aramid/ceramic mixed slurry; and then the aramid/ceramic mixed slurry is coated on at least one surface of a film. However, when aramid and inorganic ceramic particles are directly coated in combination, there will be poor adhesion between a coating and a substrate; and if a conventional binder is added, the gas permeability and thermal performance of a separator will be affected, which will cause safety problems.

Based on the above-mentioned problems in the prior art, how to improve the adhesion between aramid and ceramic particles without affecting the performance of a separator has become an urgent technical problem to be solved.

### SUMMARY OF PRESENT INVENTION

In order to solve the above-mentioned technical problems, the present disclosure provides a composite slurry. The composite slurry is prepared as follows: *in-situ* compounding a nanoceramic particle with an isocyanate through a modification reaction during which hydroxyl on a surface of the nanoceramic particle reacts with an isocyanate group in the isocyanate to obtain a modified nanoceramic particle; and *in-situ* compounding the modified nanoceramic particle with aramid through a grafting reaction during which an isocyanate group in the modified nanoceramic particle is grafted with an amido bond in the aramid to obtain the composite slurry. The composite slurry has a viscosity of 50 mPa·s (cp) to 20,000 mPa·s (cp), the isocyanate includes at least 2 isocyanate groups, and the viscosity is tested by a rotational viscometer.

In one embodiment, the nanoceramic particle is one selected from the group consisting of alumina, silicon oxide, and titanium oxide.

In one embodiment, the aramid is one selected from the group consisting of meta-aramid, para-aramid, heterocyclic aramid, and polyamide-imide (PAI).

In one embodiment, the isocyanate has a structural formula of O=C=N-R₁-N=C=O, where R₁ has a structural formula of 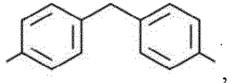 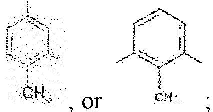 when R₁ is 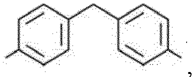 the isocyanate is 4,4'-diphenylmethane diisocyanate (MDI); when R₁ is 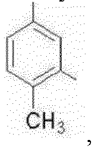 the isocyanate is methyl-2,4-diisocyanate (2,4-TDI); and when R₁ is 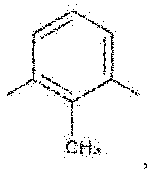 the isocyanate is methyl-2,6-diisocyanate (2,6-TDI).

The present disclosure also provides a preparation method of the composite slurry, including the following steps:
(1) drying the nanoceramic particle at 100°C to 150°C for 2 h to 10 h;
(2) adding a dried nanoceramic particle obtained in the step (1) to a reactor, adding an isocyanate-containing toluene solution, and stirring to allow homogeneous dispersion; introducing an inert gas into the reactor, heating to a preset temperature under protection of the inert gas, and allowing a reaction to obtain a crude modified nanoceramic particle product; and washing the crude modified nanoceramic particle product with an organic solvent, and drying the washed product to obtain the modified nanoceramic particle; and
(3) mixing the modified nanoceramic particle obtained in the step (2) with an aramid-containing polymerization solution, and allowing the grafting reaction to obtain the composite slurry, wherein the composite slurry has a viscosity of 50 mPa·s (cp) to 20,000 mPa·s (cp).

In one embodiment, a concentration of the isocyanate in the isocyanate-containing toluene solution in the step (2) is 0.1 mol/L to 0.5 mol/L, and a mass of the nanoceramic particle is 1% to 20% of a mass of the isocyanate-containing toluene solution.

In one embodiment, the stirring in the step (2) is conducted at 20°C to 30°C for 20 min to 60 min.

In one embodiment, the inert gas in the step (2) is nitrogen, the heating is conducted to 30°C to 60°C, and the reaction is conducted for 30 min to 120 min.

In one embodiment, the organic solvent in the step (2) is acetone, and the crude modified nanoceramic particle product is washed 3 to 5 times with the acetone.

In one embodiment, the washed product in the step (2) is dried at 30°C to 60°C for 10 min to 30 min.

In one embodiment, the *in-situ* compounding of the nanoceramic particle with the isocyanate in the step (2) involves the following reaction principle: An oxygen atom on the surface of the nanoceramic particle adsorbs water in air to produce hydroxyl (-OH) on the surface. Then the hydroxyl reacts with the isocyanate group (-N=C=O) in the isocyanate at the fixed temperature in the step (2) to produce a polymer A, namely, the modified nanoceramic particle. The surface of the nanoceramic particle has one or more hydroxyl groups (-OH) and the isocyanate includes at least 2 isocyanate groups (-N=C=O).

In one embodiment, the aramid-containing polymerization solution in the step (3) includes the aramid, and a mass ratio of the aramid to the modified nanoceramic particle is (2-10):(0.5-20).

In one embodiment, a mass percentage of the aramid in the aramid-containing polymerization solution is 2% to 10%.

In one embodiment, the aramid in the aramid-containing polymerization solution is in a liquid state.

In one embodiment, the aramid-containing polymerization solution is adopted due to the following reason: Solid aramid has low solubility, and different solid aramid products need to be dissolved by different solvents under different dissolution conditions to obtain liquid aramid. In the step (2), the aramid-containing polymerization solution produced in preparation of aramid is directly used, that is, aramid in a liquid state is directly used before becoming a solid, which can effectively avoid the above problem.

In one embodiment, in the step (3), the isocyanate group (-N=C=O) in the polymer A and the amido bond (-CO-NH-) in the aramid undergo a grafting reaction when the polymer A and the aramid are mixed, such that the aramid is *in-situ* compounded on a surface of the polymer A to produce a polymer B and thus the composite slurry is obtained. In this way, the nanoceramic particle and the aramid can be compounded without a binder, and the nanoceramic particle will not fall off.

In one embodiment, the grafting reaction in the step (3) is conducted at 20°C to 90°C for 20 min to 120 min.

In one embodiment, a preparation method of a lithium battery separator includes the following steps:
(1) thoroughly mixing the composite slurry with a pore-forming agent and a polar solvent to obtain a mixture; and
(2) degassing the mixture, coating a degassed mixture on one or two sides of the substrate layer, and immersing the substrate layer in a curing tank for curing to form the coating layer on the one or two sides of the substrate layer; and subjecting the coating layer to water-washing in a water tank, drying, and heat-setting to obtain the lithium battery separator.

In one embodiment, the composite slurry, the pore-forming agent, and the polar solvent in the step (1) are in a mass ratio of (2.5-30):(0.5-10):(60-97).

In one embodiment, the pore-forming agent is one or more selected from the group consisting of polyethylene glycol (PEG), tripropylene glycol (TPG), polyvinylpyrrolidone (PVP), anhydrous calcium chloride, anhydrous lithium chloride, methanol, ethanol, and propanol; and the pore-forming agent plays a role of regulating a porosity of the lithium battery separator, and can increase the porosity of the lithium battery separator from 25% to 35% in the prior art to 35% to 45%.

In one embodiment, the polar solvent is one selected from a group consisting of *N*,*N-*dimethylacetamide (DMAc), *N-*methylpyrrolidone (NMP), *N,N*-dimethylformamide (DMF), *N*-methylformamide (NMF), and *N-*ethylpyrrolidone (NEP).

In one embodiment, the coating layer in the step (2) has a thickness of 0.5 µm to 8 µm.

In one embodiment, the substrate layer in the step (2) has a thickness of 4 µm to 30 µm.

In one embodiment, a material of the substrate layer is one selected from a group consisting of dry PE, dry PP, a three-layer PP/PE/PP composite separator, wet PE, and a non-woven fabric.

In one embodiment, a manner for the coating in the step (2) is one selected from a group consisting of slit-extrusion, roller-coating, scraper-coating, and wire rod-coating, and the coating is conducted at room temperature.

In one embodiment, the degassing in the step (2) is conducted for 5 min to 30 min, and the degassing refers to static degassing or vacuum degassing, where the vacuum degassing is conducted with a vacuum degree of 10 mmHg to 90 mmHg; a curing agent in the curing tank includes an organic solvent and water, where a volume fraction of the organic solvent in the curing agent is 0% to 60%; the curing is conducted for 10 s to 300 s at 0°C to 60°C; the water-washing is conducted for 10 s to 300 s at 0°C to 60°C; the drying is conducted for 5 s to 300 s at 40°C to 100°C; and the heat-setting is conducted for 0.15 min to 30 min at 40°C to 200°C.

In one embodiment, the organic solvent is one selected from the group consisting of DMAc, NMP, DMF, NMF, and NEP.

The present disclosure also provides a lithium battery separator obtained by the method described above.

In one embodiment, a room-temperature capacity of the battery is 3.8362 Ah to 3.8467 Ah.

### The present disclosure has the following beneficial effects:

1. In the present disclosure, a nanoceramic particle is first *in-situ* compounded with an isocyanate for modification to obtain a modified nanoceramic particle. Then the modified nanoceramic particle is *in-situ* compounded with aramid through a grafting reaction to obtain a composite slurry. This allows the compounding of the inorganic material (the nanoceramic particle) with the organic material (aramid). Thus, the present disclosure effectively avoids the problem that nanoceramic particles are easy to fall off from a separator when a binder is required to bond the nanoceramic particles with the separator in the prior art.
2. Compared with the lithium battery separators in the prior art, a lithium battery separator prepared with the composite slurry provided by the present disclosure exhibits improved properties such as a peeling strength, a breakage temperature, and an electrolyte contact angle. When used to prepare a lithium battery separator, the composite slurry is directly coated on a substrate layer without a binder, which solves the problem that there is poor adhesion between a coating layer and a substrate layer in the lithium battery separator in the prior art. In the prior art, a conventional binder is added to bond nanoceramic particles with aramid and bond a resulting composite with a substrate layer, which affects a series of properties such as gas permeability and thermal performance of a separator. In the present disclosure, the properties of the lithium battery separator and a bonding strength between the coating layer and the substrate layer can be improved without adding a binder. Compared with the lithium battery separators in the prior art, the lithium battery separator of the present disclosure exhibits a peeling strength increased from 90 Nm⁻¹ to greater than or equal to 120 Nm⁻¹, a breakage temperature increased from (135-156)°C to higher than or equal to 200°C, an electrolyte contact angle reduced from (31-46.7)° to less than or equal to 25°, a gas permeability of less than or equal to 300 s/100 cc, a horizontal thermal shrinkage of less than or equal to 2.0% at 150°C within 1 h, and a longitudinal thermal shrinkage of less than or equal to 2.0% at 150°C within 1 h.
3. The battery of the present disclosure is prepared with the lithium battery separator. Compared with the batteries in the prior art, the battery of the present disclosure exhibits a capacity retention rate after 100 cycles increased from (63.5-65.2)% to (85-95)%, a room-temperature capacity increased from (3.8260-3.8359) Ah to (3.8362-3.8467) Ah, a high-temperature capacity (55°C) increased from (3.2618-3.2825) Ah to (3.6112-3.7171) Ah, and a low-temperature capacity (-20°C) increased from (1.6985-1.7510) Ah to (1.9309-1.9726) Ah.

### BRIEF DESCRIPTION OF THE DRAWING

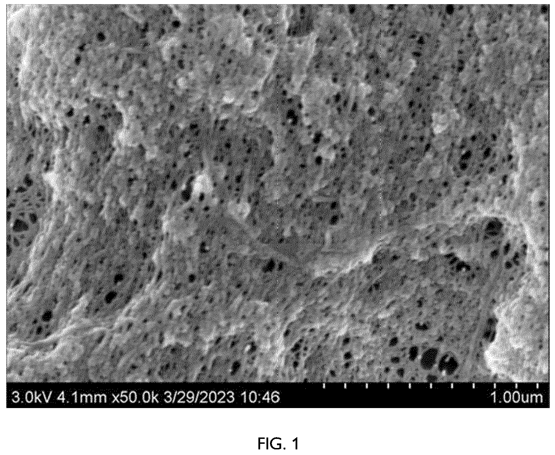

FIG. 1 is a scanning electron microscopy (SEM) image of a surface of the lithium battery separator in Example 7 of the present disclosure.

The following examples 9-12 and comparative examples 1 and 2 are not according to the invention and are present for illustration purposes only.

### DETAILED DESCRIPTION OF THE EMBODIMENTS

Among the following examples, Examples 1 to 4 are examples of preparation of a composite slurry. Examples 5 to 8 are examples of preparation of lithium battery separators with the isocyanate-modified nanoceramic particle/aramid *in-situ* composite slurries prepared in Examples 1 to 4. Examples 9 to 12 are examples of preparation of batteries with the lithium battery separators prepared in Examples 5 to 8. Comparative Examples 1 and 2 are comparative examples of batteries prepared with the lithium battery separators in the prior art.

### Example 1: Sample 1

In this example, a preparation method of a composite slurry was provided, including the following steps:
(1) A nanoceramic particle was dried at 100°C for 2 h.
(2) 2 g of a dried nanoceramic particle with a particle size of 10 nm obtained in the step (1) was added to a reactor, 200 g of a 0.1 mol/L isocyanate-containing toluene solution was added, and a resulting mixture was stirred at 20°C for 20 min to obtain a homogeneous dispersion. Nitrogen was introduced into the reactor, the homogeneous dispersion was heated to a fixed temperature of 30°C under protection of the nitrogen, and a reaction was conducted for 30 min to obtain a crude modified nanoceramic particle product. The crude modified nanoceramic particle product was washed 3 times with acetone and then dried at 30°C for 10 min to obtain a modified nanoceramic particle.

The nanoceramic particle was alumina.

An isocyanate was MDI.

This step involves the following reaction principle: An oxygen atom on a surface of the nanoceramic particle adsorbs water in air to produce hydroxyl (-OH) on the surface. Then the hydroxyl reacts with an isocyanate group (-N=C=O) in the isocyanate at the fixed temperature in the step (2) to produce a polymer A, namely, the modified nanoceramic particle. The surface of the nanoceramic particle has one or more hydroxyl groups (-OH) and the isocyanate includes 2 isocyanate groups (-N=C=O).

(3) The modified nanoceramic particle obtained in the step (2) was mixed with an aramid-containing polymerization solution, and a grafting reaction was conducted at 20°C for 20 min to obtain the composite slurry. The slurry has a viscosity of 50 mPa·s (cp), and a mass ratio of the aramid to the modified nanoceramic particle was 2:0.5.

This step involves the following reaction principle: An isocyanate group (-N=C=O) in the polymer A and an amido bond (-CO-NH-) in aramid undergo a grafting reaction when the polymer A and the aramid are mixed in the step (3), such that the aramid is *in-situ* compounded on a surface of the polymer A to produce a polymer B and thus the composite slurry (namely, sample 1) is obtained. In this way, the nanoceramic particle and the aramid can be compounded without a binder, and the nanoceramic particle will not fall off.

In this example, the aramid was meta-aramid, and a preparation process of the aramid-containing polymerization solution was as follows:
4.3256 g of m-phenylenediamine (MPD) was fully dissolved in 500 g of DMAc to obtain a mixed solution, and with the mixed solution kept at room temperature, 8.1208 g of isophthaloyl chloride (IPC) was added to allow a reaction for 40 min. A pH of a resulting reaction system was adjusted with calcium hydroxide to 7.5 to obtain a meta-aramid slurry, which was the aramid-containing polymerization solution used in this example, where a mass percentage of meta-aramid in the aramid-containing polymerization solution was 2%.

The aramid-containing polymerization solution is adopted due to the following reason: Solid aramid has low solubility, and different solid aramid products need to be dissolved by different solvents under different dissolution conditions to obtain liquid aramid. In the step (2), the aramid-containing polymerization solution produced in preparation of aramid is directly used, that is, aramid in a liquid state is directly used before becoming a solid, which can effectively avoid the above problem.

### Example 2: Sample 2

In this example, a preparation method of a composite slurry was provided, including the following steps:
(1) A nanoceramic particle was dried at 100°C for 2 h.
(2) 40 g of a dried nanoceramic particle with a particle size of 1,000 nm obtained in the step (1) was added to a reactor, 200 g of a 0.5 mol/L isocyanate-containing toluene solution was added, and a resulting mixture was stirred at 30°C for 60 min to obtain a homogeneous dispersion. Nitrogen was introduced into the reactor, the homogeneous dispersion was heated to a fixed temperature of 30°C under protection of the nitrogen, and a reaction was conducted for 30 min to obtain a crude modified nanoceramic particle product. The crude modified nanoceramic particle product was washed 3 times with acetone and then dried at 30°C for 10 min to obtain a modified nanoceramic particle.

The nanoceramic particle was silicon oxide.

The isocyanate was 2,4-TDI.

This step involves the following reaction principle: An oxygen atom on a surface of the nanoceramic particle adsorbs water in air to produce hydroxyl (-OH) on the surface. Then the hydroxyl reacts with an isocyanate group (-N=C=O) in the isocyanate at the fixed temperature in the step (2) to produce a polymer A, namely, the modified nanoceramic particle. The surface of the nanoceramic particle has one or more hydroxyl groups (-OH) and the isocyanate includes 2 isocyanate groups (-N=C=O).

(3) The modified nanoceramic particle obtained in the step (2) was mixed with an aramid-containing polymerization solution, and a grafting reaction was conducted at 90°C for 120 min to obtain the composite slurry. The slurry has a viscosity of 20,000 mPa·s (cp), and a mass ratio of the aramid to the modified nanoceramic particle was 1:2.

This step involves the following reaction principle: An isocyanate group (-N=C=O) in the polymer A and an amido bond (-CO-NH-) in aramid undergo a grafting reaction when the polymer A and the aramid are mixed in the step (3), such that the aramid is *in-situ* compounded on a surface of the polymer A to produce a polymer B and thus the composite slurry (namely, sample 2) is obtained. In this way, the nanoceramic particle and the aramid can be compounded without a binder, and the nanoceramic particle will not fall off.

In this example, the aramid was para-aramid, and a preparation process of the aramid-containing polymerization solution was as follows:
21.628 g of p-phenylenediamine (PPD) was fully dissolved in 500 g of NMP/CaCl₂ (a mass fraction of CaCl₂ was 7%) to obtain a mixed solution, the mixed solution was cooled to 0°C, and then 42.192 g of terephthaloyl chloride (TPC) was added to allow a reaction for 40 min. A pH of a resulting reaction system was adjusted with calcium hydroxide to 6.5 to obtain a para-aramid slurry, which was the aramid-containing polymerization solution used in this example, where a mass percentage of para-aramid in the aramid-containing polymerization solution was 10%.

The aramid-containing polymerization solution is adopted due to the following reason: Solid aramid has low solubility, and different solid aramid products need to be dissolved by different solvents under different dissolution conditions to obtain liquid aramid. In the step (2), the aramid-containing polymerization solution produced in preparation of aramid is directly used, that is, aramid in a liquid state is directly used before becoming a solid, which can effectively avoid the above problem.

### Example 3: Sample 3

In this example, a preparation method of a composite slurry was provided, including the following steps:
(1) A nanoceramic particle was dried at 150°C for 10 h.
(2) 20 g of a dried nanoceramic particle with a particle size of 100 nm obtained in the step (1) was added to a reactor, 200 g of a 0.3 mol/L isocyanate-containing toluene solution was added, and a resulting mixture was stirred at 20°C for 20 min to obtain a homogeneous dispersion. Nitrogen was introduced into the reactor, the homogeneous dispersion was heated to a fixed temperature of 30°C under protection of the nitrogen, and a reaction was conducted for 30 min to obtain a crude modified nanoceramic particle product. The crude modified nanoceramic particle product was washed 3 times with acetone and then dried at 60°C for 30 min to obtain a modified nanoceramic particle.

The nanoceramic particle was titanium oxide.

The isocyanate was 2,6-TDI.

This step involves the following reaction principle: An oxygen atom on a surface of the nanoceramic particle adsorbs water in air to produce hydroxyl (-OH) on the surface. Then the hydroxyl reacts with an isocyanate group (-N=C=O) in the isocyanate at the fixed temperature in the step (2) to produce a polymer A, namely, the modified nanoceramic particle. The surface of the nanoceramic particle has one or more hydroxyl groups (-OH) and the isocyanate includes 2 isocyanate groups (-N=C=O).

(3) The modified nanoceramic particle obtained in the step (2) was mixed with an aramid-containing polymerization solution, and a grafting reaction was conducted at 40°C for 80 min to obtain the composite slurry. The slurry has a viscosity of 8,000 mPa·s (cp), and a mass ratio of the aramid to the modified nanoceramic particle was 1:2.

This step involves the following reaction principle: An isocyanate group (-N=C=O) in the polymer A and an amido bond (-CO-NH-) in aramid undergo a grafting reaction when the polymer A and the aramid are mixed in the step (3), such that the aramid is *in-situ* compounded on a surface of the polymer A to produce a polymer B and thus the composite slurry (namely, sample 3) is obtained. In this way, the nanoceramic particle and the aramid can be compounded without a binder, and the nanoceramic particle will not fall off.

In this example, the aramid was heterocyclic aramid, and a preparation process of the aramid-containing polymerization solution was as follows:
PPD and 2-(4-aminophenyl)-5-aminobenzimidazole were fully dissolved in 500 g of NMP/CaCl₂ (a mass fraction of CaCl₂ was 7%) to obtain a mixed solution, the mixed solution was cooled to 0°C, and then 21.096 g of TPC was added to allow a reaction for 40 min. A pH of a resulting reaction system was adjusted with calcium hydroxide to 6.5 to obtain a heterocyclic aramid slurry, which was the aramid-containing polymerization solution used in this example, where a molar ratio of the PPD to the 2-(4-aminophenyl)-5-aminobenzimidazole was 1:2, and a total molar amount of the PPD and the 2-(4-aminophenyl)-5-aminobenzimidazole was 0.1 mol; and a mass percentage of heterocyclic aramid in the aramid-containing polymerization solution was 5%.

The aramid-containing polymerization solution is adopted due to the following reason: Solid aramid has low solubility, and different solid aramid products need to be dissolved by different solvents under different dissolution conditions to obtain liquid aramid. In the step (2), the aramid-containing polymerization solution produced in preparation of aramid is directly used, that is, aramid in a liquid state is directly used before becoming a solid, which can effectively avoid the above problem.

### Example 4: Sample 4

In this example, a preparation method of a composite slurry was provided, including the following steps:
(1) A nanoceramic particle was dried at 100°C for 2 h.
(2) 10 g of a dried nanoceramic particle with a particle size of 500 nm obtained in the step (1) was added to a reactor, 200 g of a 0.1 mol/L isocyanate-containing toluene solution was added, and a resulting mixture was stirred at 20°C for 20 min to obtain a homogeneous dispersion. Nitrogen was introduced into the reactor, the homogeneous dispersion was heated to a fixed temperature of 60°C under protection of the nitrogen, and a reaction was conducted for 120 min to obtain a crude modified nanoceramic particle product. The crude modified nanoceramic particle product was washed 5 times with acetone and then dried at 30°C for 10 min to obtain a modified nanoceramic particle.

The nanoceramic particle was alumina.

The isocyanate was 2,6-TDI.

This step involves the following reaction principle: An oxygen atom on a surface of the nanoceramic particle adsorbs water in air to produce hydroxyl (-OH) on the surface. Then the hydroxyl reacts with an isocyanate group (-N=C=O) in the isocyanate at the fixed temperature in the step (2) to produce a polymer A, namely, the modified nanoceramic particle. The surface of the nanoceramic particle has one or more hydroxyl groups (-OH) and the isocyanate includes 2 isocyanate groups (-N=C=O).

(3) The modified nanoceramic particle obtained in the step (2) was mixed with an aramid-containing polymerization solution, and a grafting reaction was conducted at 60°C for 100 min to obtain the composite slurry. The slurry has a viscosity of 10,000 mPa·s (cp), and a mass ratio of the aramid to the modified nanoceramic particle was 7:5.

This step involves the following reaction principle: An isocyanate group (-N=C=O) in the polymer A and an amido bond (-CO-NH-) in aramid undergo a grafting reaction when the polymer A and the aramid are mixed in the step (3), such that the aramid is *in-situ* compounded on a surface of the polymer A to produce a polymer B and thus the composite slurry (namely, sample 4) is obtained. In this way, the nanoceramic particle and the aramid can be compounded without a binder, and the nanoceramic particle will not fall off.

In this example, the aramid was PAI, and a preparation process of the aramid-containing polymerization solution was as follows:
In a nitrogen environment, trimellitic anhydride (TMA) and toluene diisocyanate (TDI) were added in a molar ratio of 1:1 to a reactor, then DMF was added, and a resulting mixture was stirred to allow complete dissolution; a resulting solution was heated and controlled at 80°C to 120°C to allow a reaction for 2 h, and then a resulting precipitate was fully washed with water and then oven-dried to obtain a PAI solid; and 7 g of the PAI solid was taken and added to 100 g of DMF, and a resulting mixture was stirred for dissolution to obtain a PAI solution, which was equivalent to the aramid-containing polymerization solutions in Examples 1 to 3, where a molar ratio of the DMF to the TMA was 15:1.

In this example, after the reaction is completed, the precipitate (namely, the PAI solid) can be directly obtained, and the PAI adopted in this example is soluble aramid; and to allow a grafting reaction with the polymer A, the PAI needs to be dissolved.

Viscosities of the composite slurries in Examples 1 to 4 were shown in Table 1:

| **Table 1 Viscosities of the composite slurries in Examples 1 to 4** | |
|---|---|
| No. | Viscosity/ mPa·s (cp) |
| Example 1 (sample 1) | 50 |
| Example 2 (sample 2) | 20,000 |
| Example 3 (sample 3) | 8,000 |
| Example 4 (sample 4) | 10,000 |

A viscosity test was conducted by a rotational viscometer.

### Example 5: Sample 5

In this example, the composite slurry prepared in Example 1 was used to prepare a lithium battery separator through the following steps:
(1) The composite slurry was thoroughly mixed with a pore-forming agent and a polar solvent to obtain a mixture, where the composite slurry, the pore-forming agent, and the polar solvent were in a mass ratio of 2.5:0.5:97.
(2) The mixture was subjected to static degassing for 5 min.
(3) A degassed mixture was coated on two sides of a substrate layer, and then the substrate layer was immersed in a curing tank with a curing agent to allow curing at 60°C for 10 s to form a coating layer with a thickness of 4 µm on the two sides of the substrate layer, where the curing agent included an organic solvent and water, and a volume fraction of the organic solvent in the curing agent was 60%; and then the coating layer was water-washed at 60°C for 10 s in a water tank, then dried at 40°C for 5 s, and heat-set at 40°C for 0.15 min to obtain the lithium battery separator.

The polar solvent and the organic solvent both were DMAc.

A material of the substrate layer was wet PE, and a thickness of the substrate layer was 4 µm.

The pore-forming agent was PEG, and the pore-forming agent played a role of adjusting a porosity of the lithium battery separator. The porosity of the lithium battery separator was 35%.

The lithium battery separator (sample 5) finally obtained in this example exhibited a peeling strength of 130 Nm⁻¹, a gas permeability of 175 s/100 cc, a horizontal thermal shrinkage of 2.0% at 150°C within 1 h, a longitudinal thermal shrinkage of 2.0% at 150°C within 1 h, a breakage temperature of 230°C, and an electrolyte contact angle of 25°.

### Example 6: Sample 6

In this example, the composite slurry prepared in Example 2 was used to prepare a lithium battery separator through the following steps:
(1) The composite slurry was thoroughly mixed with a pore-forming agent and a polar solvent to obtain a mixture, where the composite slurry, the pore-forming agent, and the polar solvent were in a mass ratio of 3:1:6.
(2) The mixture was subjected to static degassing for 10 min.
(3) A degassed mixture was coated on a side of a substrate layer, and then the substrate layer was immersed in a curing tank with a curing agent to allow curing at 60°C for 300 s to form a coating layer with a thickness of 8 µm on the side of the substrate layer, where the curing agent included an organic solvent and water, and a volume fraction of the organic solvent in the curing agent was 60%; and then the coating layer was water-washed at 60°C for 300 s in a water tank, then dried at 100°C for 300 s, and heat-set at 200°C for 30 min to obtain the lithium battery separator.

The polar solvent and the organic solvent both were NMP.

A material of the substrate layer was dry PP, and a thickness of the substrate layer was 12 µm.

The pore-forming agent was TPG, and the pore-forming agent played a role of adjusting a porosity of the lithium battery separator. The porosity of the lithium battery separator was 45%.

The lithium battery separator (sample 6) finally obtained in this example exhibited a peeling strength of 120 Nm⁻¹, a gas permeability of 300 s/100 cc, a horizontal thermal shrinkage of 1.0% at 150°C within 1 h, a longitudinal thermal shrinkage of 1.0% at 150°C within 1 h, a breakage temperature of 270°C, and an electrolyte contact angle of 21°.

### Example 7: Sample 7

In this example, the composite slurry prepared in Example 3 was used to prepare a lithium battery separator, and an SEM image of the lithium battery separator was shown in FIG. 1; and the preparation of the lithium battery separator included the following steps:
(1) The composite slurry was thoroughly mixed with a pore-forming agent and a polar solvent to obtain a mixture, where the composite slurry, the pore-forming agent, and the polar solvent were in a mass ratio of 3:2:15.
(2) The mixture was subjected to static degassing for 5 min.
(3) A degassed mixture was coated on two sides of a substrate layer, and then the substrate layer was immersed in a curing tank with a curing agent to allow curing at 60°C for 10 s to form a coating layer with a thickness of 6 µm on the two sides of the substrate layer, where the curing agent included an organic solvent and water, and a volume fraction of the organic solvent in the curing agent was 60%; and then the coating layer was water-washed at 60°C for 10 s in a water tank, then dried at 40°C for 5 s, and heat-set at 200°C for 30 min to obtain the lithium battery separator.

The polar solvent and the organic solvent both were DMF.

A material of the substrate layer was a three-layer PP/PE/PP composite separator, and a thickness of the substrate layer was 30 µm.

The pore-forming agent was PVP, and the pore-forming agent played a role of adjusting a porosity of the lithium battery separator. The porosity of the lithium battery separator was 40%.

The lithium battery separator (sample 7) finally obtained in this example exhibited a peeling strength of 125 Nm⁻¹, a gas permeability of 245 s/100 cc, a horizontal thermal shrinkage of 1.5% at 150°C within 1 h, a longitudinal thermal shrinkage of 1.5% at 150°C within 1 h, a breakage temperature of 250°C, and an electrolyte contact angle of 23°.

### Example 8: Sample 8

In this example, the composite slurry prepared in Example 4 was used to prepare a lithium battery separator through the following steps:
(1) The composite slurry was thoroughly mixed with a pore-forming agent and a polar solvent to obtain a mixture, where the composite slurry, the pore-forming agent, and the polar solvent were in a mass ratio of 12:5:83.
(2) The mixture was subjected to static degassing for 5 min.
(3) A degassed mixture was coated on two sides of a substrate layer, and then the substrate layer was immersed in a curing tank with a curing agent to allow curing at 60°C for 10 s to form a coating layer with a thickness of 0.5 µm on the two sides of the substrate layer, where the curing agent included an organic solvent and water, and a volume fraction of the organic solvent in the curing agent was 60%; and then the coating layer was water-washed at 0°C for 10 s in a water tank, then dried at 100°C for 5 s, and heat-set at 40°C for 0.15 min to obtain the lithium battery separator.

The polar solvent and the organic solvent both were NMF.

A material of the substrate layer was wet PE, and a thickness of the substrate layer was 4 µm.

The pore-forming agent was anhydrous calcium chloride, and the pore-forming agent played a role of adjusting a porosity of the lithium battery separator. The porosity of the lithium battery separator was improved to 42%.

The lithium battery separator (sample 8) finally obtained in this example exhibited a peeling strength of 128 Nm⁻¹, a gas permeability of 160 s/100 cc, a horizontal thermal shrinkage of 2.0% at 150°C within 1 h, a longitudinal thermal shrinkage of 2.0% at 150°C within 1 h, a breakage temperature of 200°C, and an electrolyte contact angle of 22°.

Properties of the lithium battery separators in Examples 5 to 8 were shown in Table 2:

| **Table 2 Performance parameters of the lithium battery separators in Examples 5 to 8** | | | | | | |
|---|---|---|---|---|---|---|
| No. | Peeling strength (Nm⁻¹) | Gas permeability (s/100 cc) | Horizontal thermal shrinkage at 150°C within 1 h (%) | Longitudinal thermal shrinkage at 150°C within 1 h (%) | Breakage temperature (°C) | Electrolyte contact angle (°) |
| Example 5 (sample 5) | 130 | 175 | 2.0 | 2.0 | 230 | 25 |
| Example 6 (sample 6) | 120 | 300 | 1.0 | 1.0 | 270 | 21 |
| Example 7 (sample 7) | 125 | 245 | 1.5 | 1.5 | 250 | 23 |
| Example 8 (sample 8) | 128 | 160 | 2.0 | 2.0 | 200 | 22 |

Performance tests were conducted according to test specifications in GB/T 36363-2018.

### Example 9: Sample 9

In this example, the lithium battery separator prepared in Example 5 was used to prepare a battery, that is, a 4 Ah 811 ternary lithium battery (sample 9) was assembled. Test results of the battery were shown in Table 3.

### Example 10: Sample 10

In this example, the lithium battery separator prepared in Example 6 was used to prepare a battery, that is, a 4 Ah 811 ternary lithium battery (sample 10) was assembled. Test results of the battery were shown in Table 3.

### Example 11: Sample 11

In this example, the lithium battery separator prepared in Example 7 was used to prepare a battery, that is, a 4 Ah 811 ternary lithium battery (sample 11) was assembled. Test results of the battery were shown in Table 3.

### Example 12: Sample 12

In this example, the lithium battery separator prepared in Example 8 was used to prepare a battery, that is, a 4 Ah 811 ternary lithium battery (sample 12) was assembled. Test results of the battery were shown in Table 3.

### Comparative Example 1: Sample 13

In this comparative example, a commercially-available 7 µm PE film was adopted as a lithium battery separator. The lithium battery separator exhibited a gas permeability of 145 s/100 cc, a melting temperature of 150°C, a breakage temperature of 135°C, and an electrolyte contact angle of 46.7°.

The lithium battery separator was used to assemble a 4 Ah 811 ternary lithium battery (sample 13). Test results of the battery were shown in Table 3.

### Comparative Example 2: Sample 14

In this comparative example, a commercially-available 9+2+2 µm PE/ceramic-coated film was adopted as a lithium battery separator. The lithium battery separator exhibited a peeling strength of 90 Nm⁻¹, a gas permeability of 175 s/100 cc, a horizontal thermal shrinkage of 2.0% at 150°C within 1 h, a longitudinal thermal shrinkage of 2.0% at 150°C within 1 h, a breakage temperature of 156°C, and an electrolyte contact angle of 31°.

The lithium battery separator was used to assemble a 4 Ah 811 ternary lithium battery (sample 14). Test results of the battery were shown in Table 3.

| **Table 3 Performance test results of the batteries** | | | | |
|---|---|---|---|---|
| No. | Capacity retention rate | Room-temperature capacity/Ah | High-temperature capacity (55°C)/Ah | Low-temperature capacity (-20°C)/Ah |
| Example 9 | 95% | 3.8467 | 3.7171 | 1.9726 |
| Example 10 | 88% | 3.8365 | 3.6385 | 1.9486 |
| Example 11 | 85% | 3.8362 | 3.6112 | 1.9309 |
| Example 12 | 94% | 3.8460 | 3.7072 | 1.9537 |
| Comparative Example 1 | 63.5% | 3.8260 | 3.2681 | 1.6985 |
| Comparative Example 2 | 65.2% | 3.8359 | 3.2825 | 1.7510 |

Performance tests were conducted according to test specifications in GB/T 31241-2014.

In summary, compared with the commercially-available lithium battery separators in Comparative Examples 1 and 2, the lithium battery separators prepared with the composite slurries prepared in Examples 1 to 4 exhibit significantly-improved properties. The lithium battery separator prepared with the composite slurry in the present disclosure has a peeling strength of higher than or equal to 120 Nm⁻¹, a gas permeability of less than or equal to 300 s/100 cc, a horizontal thermal shrinkage of less than or equal to 2.0% at 150°C within 1 h, a longitudinal thermal shrinkage of less than or equal to 2.0% at 150°C within 1 h, a breakage temperature of higher than or equal to 200°C, and an electrolyte contact angle of smaller than or equal to 25°.

Compared with the batteries prepared with the lithium battery separators in the comparative examples of the present disclosure, the batteries prepared with the lithium battery separators in the examples of the present disclosure exhibit significantly-improved properties, that is, the battery prepared with the lithium battery separator including the composite slurry exhibits a capacity retention rate after 100 cycles increased from (63.5-65.2)% to (85-95)%, a room-temperature capacity increased from (3.8260-3.8359) Ah to (3.8362-3.8467) Ah, a high-temperature capacity (55°C) increased from (3.2618-3.2825) Ah to (3.6112-3.7171) Ah, and a low-temperature capacity (-20°C) increased from (1.6985-1.7510) Ah to (1.9309-1.9726) Ah.

It should be understood that the present disclosure is not limited to the content and structures that have been described above and shown in the accompanying drawing, and various modifications and changes can be made without departing from the scope of the present disclosure. The scope of the present disclosure is defined only by the appended claims.

## Claims

1. A composite slurry, wherein the composite slurry is prepared as follows:
*in-situ* compounding a nanoceramic particle with an isocyanate through a modification reaction during which hydroxyl on a surface of the nanoceramic particle reacts with an isocyanate group in the isocyanate to obtain a modified nanoceramic particle; and
*in-situ* compounding the modified nanoceramic particle with aramid through a grafting reaction during which an isocyanate group in the modified nanoceramic particle is grafted with an amido bond in the aramid to obtain the isocyanate-modified nanoceramic particle/aramid *in-situ* composite slurry, wherein the isocyanate-modified nanoceramic particle/aramid *in-situ* composite slurry has a viscosity of 50 mPa·s (cp) to 20,000 mPa·s (cp), the isocyanate comprises at least 2 isocyanate groups, and the viscosity is determined as described in the description.

2. The composite slurry according to claim 1, wherein the nanoceramic particle is one selected from a group consisting of alumina, silicon oxide, and titanium oxide.

3. The composite slurry according to claim 2, wherein the aramid is one selected from a group consisting of meta-aramid, para-aramid, heterocyclic aramid, and polyamide-imide (PAI).

4. The composite slurry according to claim 3, wherein the isocyanate has a structural formula of O=C=N-R₁-N=C=O, wherein R₁ has a structural formula of 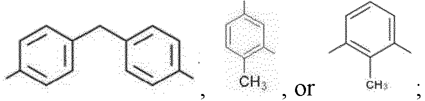 when R₁ is 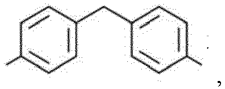 the isocyanate is 4,4'-diphenylmethane diisocyanate (MDI); when R₁ is 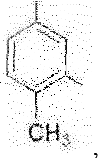 the isocyanate is methyl-2,4-diisocyanate (2,4-TDI); and when R₁ is 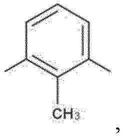 the isocyanate is methyl-2,6-diisocyanate (2,6-TDI).

5. A method for preparing the composite slurry according to any one of claims 1 to 4, comprising the following steps:
(1) drying the nanoceramic particle at 100°C to 150°C for 2 h to 10 h;
(2) adding the dried nanoceramic particle to a reactor, adding an isocyanate-containing toluene solution, and stirring to allow homogeneous dispersion; introducing an inert gas into the reactor, heating to a preset temperature under protection of the inert gas, and allowing a reaction to obtain a crude modified nanoceramic particle product; and washing the crude modified nanoceramic particle product with an organic solvent, and drying the washed product to obtain the modified nanoceramic particle; and
(3) mixing the modified nanoceramic particle with an aramid-containing polymerization solution, and allowing the grafting reaction to obtain the isocyanate-modified nanoceramic particle/aramid *in-situ* composite slurry, wherein the isocyanate-modified nanoceramic particle/aramid *in-situ* composite slurry has a viscosity of 50 mPa·s (cp) to 20,000 mPa·s (cp).

6. The method according to claim 5, wherein a concentration of the isocyanate in the isocyanate-containing toluene solution in the step (2) is 0.1 mol/L to 0.5 mol/L, and a mass of the nanoceramic particle is 1% to 20% of a mass of the isocyanate-containing toluene solution.

7. The method according to claim 5, wherein the stirring in the step (2) is conducted at 20°C to 30°C for 20 min to 60 min.

8. The method according to claim 5, wherein the inert gas in the step (2) is nitrogen, the heating is conducted to 30°C to 60°C, and the reaction is conducted for 30 min to 120 min.

9. The method according to claim 5, wherein the organic solvent in the step (2) is acetone, and the crude modified nanoceramic particle product is washed 3 to 5 times with the acetone.

10. The method according to claim 5, wherein the washed product in the step (2) is dried at 30°C to 60°C for 10 min to 30 min.

11. The method according to claim 5, wherein the aramid-containing polymerization solution in the step (3) comprises the aramid; a mass ratio of the aramid to the modified nanoceramic particle is (2-10):(0.5-20); and a mass percentage of the aramid in the aramid-containing polymerization solution is 2% to 10%.

12. The method according to claim 5, wherein the grafting reaction in the step (3) is conducted at 20°C to 90°C for 20 min to 120 min.

13. A method for preparing a lithium battery separator, which includes the following steps:
(1) thoroughly mixing the composite slurry according to any one of claims 1 to 4 with a pore-forming agent and a polar solvent to obtain a mixture; and
(2) degassing the mixture, coating a degassed mixture on one or two sides of the substrate layer, and immersing the substrate layer in a curing tank for curing to form the coating layer on the one or two sides of the substrate layer; and
subjecting the coating layer to water-washing in a water tank, drying, and heat-setting to obtain the lithium battery separator.

14. A lithium battery separator obtained by the method of claim 13.

## Patentansprüche

1. Schlamm von in situ zusammengesetztem aromatischem Polyamid, **dadurch gekennzeichnet, dass** zunächst Nanokeramikpartikel mit Isocyanat in situ verbunden modifiziert werden, wobei die Modifikation darin besteht, dass Hydroxylgruppen auf der Oberfläche der Nanokeramikpartikel mit Isocyanatgruppen des Isocyanats reagieren, um modifizierte Nanokeramikpartikel zu erhalten, und anschließend die modifizierten Nanokeramikpartikel mit aromatischem Polyamid durch eine Pfropfreaktion in situ verbunden werden, wobei während des Verbundprozesses die Isocyanatgruppen der modifizierten Nanokeramikpartikel mit den Amidbindungen des aromatischen Polyamids eine Pfropfreaktion eingehen, wodurch die beiden Materialien Nanokeramikpartikel und aromatisches Polyamid verbunden werden, um den Schlamm von in situ zusammengesetztem aromatischem Polyamid zu erhalten, wobei die Viskosität des Schlamms 50-20000 mPa·s (cp) beträgt, wobei das Isocyanat mindestens 2 Isocyanatgruppen umfasst und wobei die Viskosität unter Verwendung eines Rotationsviskosimeters geprüft wird.

2. Schlamm von in situ zusammengesetztem aromatischem Polyamid nach Anspruch 1, **dadurch gekennzeichnet, dass** die Nanokeramikpartikel eines aus Aluminiumoxid, Siliziumoxid oder Titanoxid sind.

3. Schlamm von in situ zusammengesetztem aromatischem Polyamid nach Anspruch 2, **dadurch gekennzeichnet, dass** das aromatische Polyamid eines aus meta-aromatischem Polyamid, para-aromatischem Polyamid, heterozyklischem Aramid, Polyamidimid ist.

4. Schlamm von in situ zusammengesetztem aromatischem Polyamid nach Anspruch 3, **dadurch gekennzeichnet, dass** die Strukturformel des Isocyanats O=C=N-R₁-N=C=O ist, wobei die Strukturformel von R ₁ 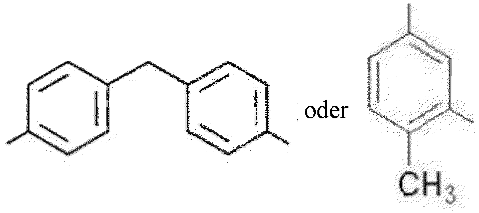 oder 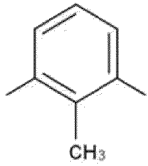 ist; Wenn R₁ 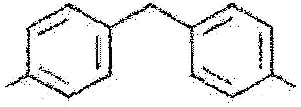 ist, ist das Isocyanat 4,4'-Diphenylmethandiisocyanat; Wenn R ₁ 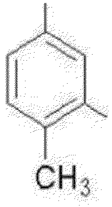 ist, ist das Isocyanat Methyl-2,4-Diisocyanat; Wenn R ₁ 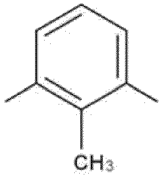 ist, ist das Isocyanat Methyl-2,6-Diisocyanat.

5. Verfahren zur Herstellung eines Schlamms von in situ zusammengesetztem aromatischem Polyamid nach einem der Ansprüche 1 bis 4, **dadurch gekennzeichnet, dass** es die folgenden Schritte umfasst:
(1) Trocknen von Nanokeramikpartikeln bei einer Trocknungstemperatur von 100-150°C und einer Trocknungszeit von 2-10h;
(2) Zugabe der in Schritt (1) getrockneten Nanokeramikpartikel in den Reaktor, anschließend Zugabe einer Toluollösung, die Isocyanat enthält, Rühren und Dispergieren und dann Einleiten eines Inertgases in den Reaktor, Erhitzen auf eine feste Temperatur unter dem Schutz des Inertgases, und dann Reagieren und Erhalten eines modifizierten nanokeramischen partikelnrohlings nach Abschluss der Reaktion, erneutes Trocknen nach dem Waschen, um modifizierte Nanokeramikpartikel zu erhalten;
(3) Mischen der in Schritt (2) erhaltenen modifizierten Nanokeramikpartikel mit einer Arylpolyamid-Polymerisationslösung und anschließendes Durchführen einer Pfropfreaktion, um den Schlamm von in situ zusammengesetztem aromatischem Polyamid zu erhalten, wobei der Schlamm eine Viskosität von 50-20.000 mPa-s (cp) aufweist.

6. Verfahren zur Herstellung eines Schlamms von in situ zusammengesetztem aromatischem Polyamid nach Anspruch 5, dadurch geennzeichnet, dass die Konzentration des Isocyanats in der Toluollösung in Schritt (2) 0,1-0,5 mol/L beträgt und die Masse der Nanokeramikpartikel 1-20 % der Masse der Toluollösung ausmacht.

7. Verfahren zur Herstellung eines Schlamms von in situ zusammengesetztem aromatischem Polyamid nach Anspruch 5, **dadurch gekennzeichnet, dass** die Rühr- und Dispergiertemperatur in Schritt (2) 20-30 °C beträgt und die Zeit 20-60 Minuten beträgt.

8. Verfahren zur Herstellung eines Schlamms von in situ zusammengesetztem aromatischem Polyamid nach Anspruch 5, **dadurch gekennzeichnet, dass** das in Schritt (2) verwendete Inertgas Stickstoff ist, die feste Temperatur nach Einleiten des Stickstoffs 30-60 °C beträgt und die Reaktionszeit 30-120 Minuten beträgt.

9. Verfahren zur Herstellung eines Schlamms von in situ zusammengesetztem aromatischem Polyamid nach Anspruch 5, **dadurch gekennzeichnet, dass** in Schritt (2) das organische Lösungsmittel Aceton ist und die Anzahl der Waschvorgänge des Rohprodukts der modifizierten Nanokeramikpartikel mit Aceton 3-5 beträgt.

10. Verfahren zur Herstellung eines Schlamms von in situ zusammengesetztem aromatischem Polyamid nach Anspruch 5, **dadurch gekennzeichnet, dass** die Temperatur beim erneuten Trocknen in Schritt (2) 30-60 °C beträgt und die Zeit für das erneute Trocknen 10-30 Minuten beträgt.

11. Verfahren zur Herstellung eines Schlamms von in situ zusammengesetztem aromatischem Polyamid nach Anspruch 5, **dadurch gekennzeichnet, dass** die aromatische Polyamid-Polymerisationslösung in Schritt (3) aromatisches Polyamid umfasst, wobei das Massenverhältnis von aromatischem Polyamid zu den modifizierten Nanokeramikpartikeln (2-10):(0,5-20) beträgt; wobei der Massenanteil des aromatischen Polyamids in der aromatischen Polyamid-Polymerisationslösung 2-10% beträgt .

12. Verfahren zur Herstellung eines Schlamms von in situ zusammengesetztem aromatischem Polyamid nach Anspruch 5, **dadurch gekennzeichnet, dass** die Temperatur der Pfropfreaktion in Schritt (3) 20-90 °C beträgt und die Reaktionszeit 20-120 Minuten beträgt.

13. Verfahren zur Herstellung von Lithiumbatterie-Trennmembran, umfassend die folgenden Schritte:
(1) Mischen des Schlamms von in situ zusammengesetztem aromatischem Polyamid nach einem der Ansprüche 1 bis 4 mit einem Porenbildner und einem polaren Lösungsmittel, um eine Mischung zu erhalten;
(2) Auftragen der entlüfteten Mischung auf eine oder beide Seiten der Basisschicht, anschließend Eintauchen in ein Koagulationsbad zur Koagulation, wodurch auf einer oder beiden Seiten der Basisschicht eine Überzugsschicht gebildet wird; Eintauchen der Überzugsschicht in ein Wasserbad zur Wasserwäsche, TTrocknen und Thermofixieren, um die Lithiumbatterie-Trennmembran zu erhalten.

14. Lithiumbatterie-Trennmembran, die nach dem Verfahren nach Anspruch 13 hergestellt ist.

## Revendications

1. Suspension de polyamide aromatique composite in situ, **caractérisée en ce que** les particules nanocéramiques sont d'abord composées à un isocyanate in situ pour modification, la modification consiste à faire réagir les groupes hydroxyles à la surface des particules nano-céramiques avec les groupes isocyanate de l'isocyanate pour obtenir des particules nanocéramiques modifiées; ces particules nanocéramiques modifiées sont ensuite composite au polyamide aromatique in situ par greffage; au cours du processus de composition, l'isocyanate présent dans les particules nanocéramiques modifiées et la liaison amide du polyamide aromatique subissent une réaction de greffage pour composer les particules nanocéramiques avec le polyamide aromatique afin d'obtenir la suspension de polyamide aromatique composite in situ, dont la viscosité est comprise entre 50 et 20 000 mPa·s (cp), dans lequel l'isocyanate contient au moins 2 groupes isocyanate et la viscosité est mesurée à l'aide d'un viscosimètre rotatif.

2. Suspension de polyamide aromatique composite in situ selon la revendication 1, **caractérisée en ce que** les particules nano-céramiques sont l'un des oxyde d'aluminium, d'oxyde de silicium et d'oxyde de titane.

3. Suspension de polyamide aromatique composite in situ selon la revendication 2, **caractérisée en ce que** le polyamide aromatique est l'un des polyamides méta-aromatiques, polyamides para-aromatiques, aramides hétérocycliques et polyamide-imide.

4. Suspension de polyamide aromatique composite in situ selon la revendication 3, **caractérisée en ce que** la formule développée de l'isocyanate est O=C=N-R₁-N=C=O, dans laquelle la formule développée de R1 est 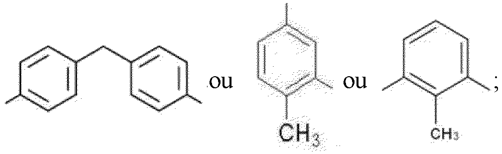 lorsque R₁ est 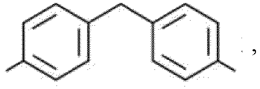 l'isocyanate est le 4,4'-diphénylméthane diisocyanate; lorsque R₁ est 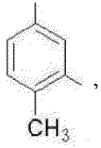 l'isocyanate est le méthyl-2,4-diisocyanate; Lorsque R₁ est 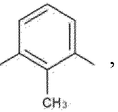 l'isocyanate est le méthyl-2,6-diisocyanate.

5. Procédé de préparation de la suspension de polyamide aromatique composite in situ selon l'une quelconque des revendications 1 à 4, **caractérisé en ce qu'**il comprend les étapes suivantes:
(1) sécher les particules nano-céramiques à une température de séchage de 100 à 150 °C pendant un temps de séchage de 2 à 10 heures;
(2) ajouter les particules nano-céramiques séchées à l'étape (1) dans une cuve de réaction, puis ajouter une solution de toluène contenant de l'isocyanate, agiter et disperser, introduire un gaz inerte dans la cuve de réaction, chauffer à une une température prédéfinie sous la protection du gaz inerte, et faire réagir, une fois la réaction terminée, obtenir une particule nano-céramique modifiée brute, laver la particule nano-céramique modifiée brute avec un solvant organique, et resécher après lavage pour obtenir une particule nano-céramique modifiée;
(3) mélanger les particules nano-céramiques modifiées obtenues à l'étape (2) à une solution de polymérisation contenant polyamide aromatique, puis soumettre à une réaction de greffage pour obtenir une suspension de polyamide aromatique composite in situ ayant une viscosité de 50 à 2000 0 mPa·s (cp).

6. Procédé de préparation de la suspension de polyamide aromatique composite in situ selon la revendication 5, **caractérisé en ce que** la concentration d'isocyanate dans la solution de toluène à l'étape (2) est de 0,1 à 0,5 mol/L, et la masse des particules nano-céramiques représente 1 à 20 % de la masse de la solution de toluène.

7. Procédé de préparation de la suspension de polyamide aromatique composite in situ selon la revendication 5, **caractérisé en ce que** la température d'agitation et de dispersion dans l'étape (2) est de 20 à 30 °C et la durée est de 20 à 60 minutes.

8. Procédé de préparation de la suspension de polyamide aromatique composite in situ selon la revendication 5, **caractérisé en ce que** le gaz inerte dans l'étape (2) est de l'azote, la une température prédéfinie de chauffage après l'introduction de l'azote est de 30 à 60 °C et le temps de réaction est de 30 à 120 min.

9. Procédé de préparation de la suspension de polyamide aromatique composite in situ selon la revendication 5, **caractérisé en ce que** le solvant organique de l'étape (2) est l'acétone, et le produit brut de particules nano-céramiques modifiées est lavé avec de l'acétone 3 à 5 fois.

10. Procédé de préparation de la suspension de polyamide aromatique composite in situ selon la revendication 5, **caractérisé en ce que** la température de reséchage dans l'étape (2) est de 30 à 60 °C et le temps de reséchage est de 10 à 30 minutes.

11. Procédé de préparation de la suspension de polyamide aromatique composite in situ selon la revendication 5, **caractérisé en ce que** le liquide de polymérisation du polyamide aromatique de l'étape (3) contient du polyamide aromatique, et le rapport massique du polyamide aromatique aux particules nano-céramiques modifiées est (2-10) : (0,5-20); le pourcentage massique de polyamide aromatique dans le liquide de polymérisation de polyamide aromatique est de 2 à 10 %.

12. Procédé de préparation de la suspension de polyamide aromatique composite in situ selon la revendication 5, **caractérisé en ce que** la température de la réaction de greffage à l'étape (3) est de 20 à 90 °C et le temps de réaction est de 20 à 120 min.

13. Procédé de préparation d'un séparateur de batterie au lithium, comprenant les étapes suivantes :
(1) mélanger uniformément la suspension du polyamide aromatique composite in situ selon l'une quelconque des revendications 1 à 4 avec un agent porogène et un solvant polaire pour obtenir un mélange;
(2) après avoir enduit le mélange dégazé sur un côté ou les deux côtés de la couche de substrat, immerger la couche de substrat dans un réservoir de coagulation pour la coagulation, formant ainsi une couche de revêtement sur un côté ou les deux côtés de la couche de substrat; immerger la couche de revêtement dans un réservoir d'eau pour le lavage à l'eau, le séchage et le réglage thermique, obtenant ainsi le séparateur de batterie au lithium.

14. Séparateur de batterie au lithium préparé par le procédé tel que revendiqué dans la revendication 13.
